# EUROPÄISCHE PATENTANMELDUNG

(11) **EP 4 134 231 A1**
(43) Veröffentlichungstag der Anmeldung: **15.02.2023**
(21) Anmeldenummer: 22182755.3
(22) Anmeldetag: 04.07.2022
(51) Int. Cl.: B32B 7/027, B32B 3/26, B32B 5/02, B32B 5/18, B32B 5/24, B32B 7/12, B32B 9/04, B32B 15/04

(54) **XPS-PLATTE**

(30) Priorität: 11.08.2021 AT 506522021
(71) Anmelder: Austrotherm GmbH, 7423 Pinkafeld (AT)
(72) Erfinder: Stifter, Michael, 2620 Neunkirchen (AT)
(74) Vertreter: Müllner, Martin

(57) **Zusammenfassung**

Eine XPS-Platte ist aus mindestens zwei dünneren XPS-Platten durch Verschweißen oder Verkleben derselben hergestellt, wobei zwischen den dünneren XPS-Platten eine Schicht aus wärmeleitendem Material vorgesehen ist. Damit diese XPS-Platte den Brandtest besteht, hat die Schicht erfindungsgemäß eine flächenbezogene Wärmeleitfähigkeit von zumindest 25·10⁻³ W/K bei 20°C. Damit die XPS-Platte genügend mechanische Stabilität hat, auch wenn die Schicht aus Metall besteht, kann die Schicht eine gelochte Metallfolie oder ein Geflecht aus Metallfäden sein, sodass die beiden XPS-Platten auch direkten Kontakt miteinander haben. Geeignete Metalle sind Aluminium, Kupfer und Eisen. Wenn die Schicht aus Grafit besteht, kann diese auch durchgehend, also ohne Löcher, ausgeführt sein.

## Beschreibung

### Technisches Gebiet

Die vorliegende Erfindung betrifft eine XPS-Platte, die aus mindestens zwei dünneren XPS-Platten durch Verschweißen oder Verkleben derselben hergestellt ist, wobei zwischen den dünneren XPS-Platten eine Schicht aus wärmeleitendem Material vorgesehen ist.

### Stand der Technik

Aus EP 2687354 A der BASF ist bereits bekannt, dicke XPS-Platten aus zumindest zwei dünneren XPS-Platten zusammenzusetzen. Der Grund dafür ist, dass halogenhaltige Treibmittel zum Schäumen der XPS-Platten aus Umweltschutzgründen nicht mehr zulässig sind und dass es schwierig oder sogar unmöglich ist, dicke XPS Platten, die gute Wärmedämmeigenschaften haben, mit halogenfreien Treibmitteln, zum Beispiel Kohlendioxid, zu schäumen.

Die Schwierigkeit, die sich dabei ergibt, liegt aber unter anderem im Brandverhalten dieser zusammengesetzten dicken XPS-Platten. Die Platten werden üblicherweise miteinander verklebt oder thermisch verschweißt. Beim Verkleben ergibt sich eine relativ dicke Klebeschicht, und beim Zusammenschweißen ergibt sich eine relativ dicke Schweißnaht. Sowohl die Klebeschicht als auch die Schweißnaht brennen ganz erheblich besser als das ursprüngliche geschäumte Material. Die genannte Schrift versucht dieses Problem dadurch zu lösen, dass sie eine sehr geringe Dicke der Schweißnaht vorsieht. Bei den Beispielen, die das weit verbreitete Verschweißen mit einem Heizschwert betreffen, liegt die Dicke der Schweißnaht zwischen 40 mm und 190 mm. Nach den Angaben in dieser Schrift wird dadurch der Brandtest bestanden, und die Schweißnaht weist eine ausreichende Festigkeit auf.

Es ist klar, dass der Brandtest umso eher bestanden wird, je dünner die Schweißnaht ist, und dass die Festigkeit umso höher ist, je dicker die Schweißnaht ist. Man muss somit einen Kompromiss zwischen Brandverhalten und Festigkeit finden. Nach Versuchen der Erfinder der vorliegenden Erfindung ist es aber in vielen Fällen nicht möglich, solch einen Kompromiss zu finden, d.h. die Schweißnaht so auszuführen, dass sowohl der Brandtest bestanden als auch eine ausreichende Festigkeit erzielt wird.

Dies dürfte auch die BASF erkannt haben, denn in ihrem jüngeren Patent EP 3278978 B heißt es in Absatz [0027]: "Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als 'Dochteffekt' bezeichnet. Ist hingegen keine Schweißnaht oder nur eine sehr dünne Schweißnaht vorhanden, sind die jeweiligen dünneren Platten nicht fest genug miteinander verbunden, sodass das entsprechende Produkt nicht stabil ist."

Gemäß dieser Schrift, Beispiel 4 in Tabelle 1, wird eine Styrodur-Platte mit einer alukaschierten Styrodur-Platte verschweißt. (Styrodur ist die Marke der BASF für ihre XPS-Platten.) Gemäß Beispiel 8 in Tabelle 2 wird eine dreilagige XPS-Platte hergestellt, indem eine erste Styrodur-Platte, eine zweite, alukaschierte Styrodur-Platte und eine dritte Styrodur-Platte miteinander verschweißt werden.

Der Zweck der Kaschierung besteht darin, dass das Treibmittel am Ausdiffundieren gehindert wird bzw. dieser Prozess zumindest deutlich verzögert wird (Absatz [0018] dieser Schrift). Der Grund für das Zusammensetzen der dicken Platte aus dünneren Platten liegt darin, dass eine außen liegende Aluminiumkaschierung beim Anbringen der Platten an einem Gebäude leicht beschädigt wird und dass außerdem auf der Aluminiumkaschierung ein Putz nur schlecht haftet. (Siehe die Absätze [0022] und [0023] dieser Schrift.) Da jedoch gemäß dieser Schrift außen "normale" XPS-Platten vorgesehen sind, lassen sich diese Platten trotz der (innen liegenden) Kaschierung genauso leicht verarbeiten wie herkömmliche XPS-Platten (Absatz [0025] dieser Schrift).

In dieser Schrift wird weiters bereits festgestellt, dass die Aluminiumschicht vorteilhaft beim Brandtest ist (Absatz [0026]). Begründet wird dies mit einer sehr hohen Homogenität der Schweißnaht (Absätze [0028] und [0029]): "Die im erfindungsgemäßen Verfahren gebildeten Schweißnähte, die aufgrund des thermischen Verschweißens die einzelnen dünneren Schaumstoffplatten zu der zumindest zweilagigen Schaumstoffplatte miteinander verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.... Dies hat den Vorteil, dass im erfindungsgemäßen Verfahren keine (oder nur in sehr geringem Umfang) Dellen bzw. Einfallstellen auf den Oberflächen der zu verschweißenden Ausgangsplatten gebildet werden.... Solche Dellen/Einfallstellen führen zu verstärkten Inhomogenitäten in der Schweißnaht, was sich wiederum (wie nachfolgend aufgeführt) negativ auf das Brandverhalten, aber auch die Stabilität der zumindest zweilagigen thermoplastischen Schaumstoffplatten auswirken kann."

Es ist offensichtlich, dass solch eine hohe Homogenität nur mit einer durchgehenden Folie erreicht werden kann, und dass eine durchgehende Folie die Wasserdampfdiffusion vollständig verhindert. Das gilt insbesondere für Aluminiumfolien, die in den angeführten Beispielen verwendet wurden. Es besteht aber auch ein großer Bedarf an Wärmedämmplatten, die Wasserdampfdiffusion in gewissem Maße zulassen.

Ein weiterer Nachteil besteht darin, dass die hohe Homogenität nur mit einem speziellen kontaktlosen Verfahren erreicht werden kann (Schritte b bis e von Anspruch 8 dieser Schrift):
"b) in den Zwischenraum werden mindestens zwei Heizelemente auf parallel zueinander versetzten Ebenen und parallel zu den beiden dünneren Schaumstoffplatten (TS) und (NS) eingeführt, wobei sich die Oberflächen der dünneren thermoplastischen Schaumstoffplatte (TS), die Metalldeckschicht der dünneren Schaumstoffplatte (NS) und die Heizelemente nicht gegenseitig berühren,
c) die Heizelemente werden so weit zwischen die beiden dünneren Schaumstoffplatten (TS) und (NS) eingeführt, bis zwischen den beiden dünneren Schaumstoffplatten (TS) und (NS) bezogen auf jede Stelle der jeweiligen Oberfläche der beiden dünneren Schaumstoffplatten (TS) und (NS) zumindest zeitweise sich mindestens eines der Heizelemente befunden hat,
d) die Heizelemente werden vollständig aus dem Zwischenraum wieder entfernt,
e) mindestens eine der beiden dünneren Schaumstoffplatten (TS) und (NS) wird gegen die Oberfläche der jeweiligen anderen dünneren Schaumstoffplatte (TS) und (NS) gedrückt".

Die Dicke der Aluminiumfolie beträgt gemäß Anspruch 12 dieser Schrift 0,01 bis 0,1 mm, vorzugsweise 0,02 bis 0,06 mm.

Im Vergleich zu der kontaktbehafteten Verschweißung mittels eines Heizschwerts, wie es z.B. in EP 2724843 B beschrieben ist, ist dies doch deutlich mehr Aufwand, und insbesondere können die bereits entwickelten und in Verwendung stehenden Maschinen mit Heizschwert nicht für das neue Verfahren verwendet werden.

Hinzu kommt, dass der Brandtest B2 gemäß DIN 4102-1: 1889-05, der in beiden Schriften herangezogen ist, durch die seit 13. Juni 2016 EU-weit verbindliche Regelung SH02-EN ISO 11925-2:2010 erheblich verschärft wurde: Bei mehrlagig verschweißten, thermoplastischen Schaumstoffplatten ist gemäß Punkt 4) dieser Regelung auch die Schweißnaht selbst einem Brandtest zu unterziehen, d.h. es muss auch bei ausschließlicher Beflammung der Schweißnaht der Brandtest bestanden werden, was erheblich schwieriger zu erreichen ist als bei der Flächen- und/oder Kantenbeflammung gemäß dem Brandtest B2.

### Kurzbeschreibung der Erfindung

Es ist Aufgabe der vorliegenden Erfindung, eine XPS-Platte der eingangs genannten Art zu schaffen, die den Brandtest auch bei ausschließlicher Beflammung der Schweißnaht zuverlässig besteht und dennoch ausreichend mechanisch stabil ist.

Diese Aufgabe wird durch eine XPS-Platte der eingangs genannten Art erfindungsgemäß dadurch gelöst, dass die Schicht eine flächenbezogene Wärmeleitfähigkeit von zumindest 25·10⁻³ W/K bei 20°C hat.

Bei Vorhandensein solch einer Einlage wird auch der Brandtest gemäß SH02-EN ISO 11925-2:2010 zuverlässig bestanden. Der Grund dafür dürfte sein, dass durch die Wärmeleitfähigkeit der Einlage die Hitze der Testflamme abgeleitet und im Inneren der Wärmedämmplatte verteilt wird, sodass es wesentlich länger dauert, bis die Zündtemperatur erreicht wird.

Unter der "flächenbezogenen Wärmeleitfähigkeit" wird die Wärmeleitfähigkeit mal der Dicke der Folie verstanden. Bei reinem Aluminium einer Dicke von 0,1 mm beträgt diese 237 W/(m·K) · 0,1 mm ≈ 24·10⁻³ W/K. Sie nimmt zwar mit zunehmender Temperatur ab, aber dies wirkt sich in der Praxis kaum aus.

Damit eine ausreichende mechanische Stabilität der Verbindung trotz Vorhandenseins einer Schicht aus Metall zwischen den XPS-Platten gegeben ist, können in der Metallschicht Öffnungen vorgesehen sein. Nach zwei verschiedenen Ausgestaltungen der Erfindung kann entweder eine gelochte Metallfolie oder ein Geflecht aus Metallfäden für die Schicht verwendet werden. Wenn die Schicht aus Grafit besteht, ist die mechanische Festigkeit zwar allgemein höher, aber auch hier sind Löcher zur Erhöhung der mechanischen Festigkeit günstig.

Dadurch, dass die Schicht zwischen den XPS-Platten nicht "dicht" ist, also Löcher aufweist (wobei die Löcher auch durch Zwischenräume zwischen den Metallfasern gebildet sein können), kommen die zu verschweißenden Wärmedämmplatten an ausreichend vielen Stellen in direkten Kontakt, sodass die Verbindung mechanisch stabil ist. Außerdem ist ein thermisches Verschweißen mittels eines Heizschwerts möglich. Aus diesem Grund ist ein Flächenanteil der Löcher von zumindest 20% bevorzugt. Schließlich ist ein weiterer Vorteil, dass die XPS-Platte diffusionsoffen ist, wogegen eine durchgehende Aluminiumfolie eine Dampfsperre wäre.

Der Lochanteil in einer Metallfolie vermindert natürlich die flächenbezogene Wärmeleitfähigkeit. Es ist daher günstig, wenn der Flächenanteil der Löcher maximal 50% beträgt.

Damit die Metallfolie bzw. das Metallgeflecht nicht zu dick sein muss, soll das Metall eine hohe Wärmeleitfähigkeit aufweisen. Es ist daher bevorzugt, dass das Metall ausgewählt ist aus Aluminium, Kupfer und Eisen, wobei Eisen (Stahlblech) wegen der geringeren Wärmeleitfähigkeit weniger bevorzugt ist.

### Beschreibung der Ausführungsarten

Anhand der folgenden Versuche wird die Erfindung näher erläutert. Auf einer temperierten, hinreichend großen Heizplatte mit 200°C Oberflächentemperatur wurde die Aluminiumfolie vorab auf die Heizplatte gelegt, damit eine gleichmäßige Erwärmung der Metalleinlage gewährleistet ist. Es wurden Proben des Produkts TOP30 (das ist eine XPS-Platte von Austrotherm) mit einer Größe von 90 mm x 250 mm verwendet. Diese Proben wurden manuell der Heizplatte zugeführt bzw. auf die Aluminiumfolie auf der Heizplatte gelegt, für 10 Sekunden erhitzt und danach manuell zusammengefügt. Es wurden Zugversuche mit derart hergestellten XPS-Platten mit innen liegender Aluminiumschicht mit einer statistischen Grundgesamtheit von jeweils 5 verschiedenen Proben mit Lochanteilen von 7,1 %, 22,6 % und 29,7 % durchgeführt. Diese ergaben folgende gemittelte Zugfestigkeiten:

**Tabelle 1**

| **Lochanteil** | **7,1%** | **22,6%** | **29,7%** |
|---|---|---|---|
| Gemittelte Zugfestigkeit in kPa | 40,55 kPa | 156,85 kPa | 160,22 kPa |
| Bemerkung | Nicht bestanden | Bestanden | Bestanden |

Die Zugfestigkeit soll nach Prüfnorm EN 1607 mindestens 150 kPa betragen. Das bedeutet, dass mit einem Lochanteil von 7,1% die Zugfestigkeit weit unter dem Grenzwert liegt, aber mit einem Lochanteil von 22,6% bereits über dem Grenzwert liegt. Auch der Wasserdampfdiffusionstest wurde mit diesem Lochanteil bestanden.

Es wurden derartige Versuche mit verschieden dicken Aluminiumfolien durchgeführt. Dabei zeigte sich, dass mit Aluminiumfolien mit einer Dicke von 0,144 mm der Brandtest nicht reproduzierbar bestanden wurde, mit Aluminiumfolien mit einer Dicke von 0,18 mm sehr wohl.

Weiters wurde in Simulationsrechnungen die Auswirkung von Löchern auf die Wärmeleitfähigkeit einer Folie bestimmt. Dabei ergab sich:

**Tabelle 2**

| Lochanteil in % | Wärmeleitfähigkeit (relativ) |
|---|---|
| 0 | 1 |
| 1,1 | 0,976 |
| 4,5 | 0,906 |
| 10,2 | 0,804 |
| 18,1 | 0,678 |
| 28,3 | 0,536 |
| 40,7 | 0,390 |

Linear interpoliert ergibt sich für 22,6% Lochanteil ein Faktor 0,615.

Somit ergibt sich für die 0,18 mm dicke Aluminiumfolie mit einem Lochanteil von 22,6% eine flächenbezogene Wärmeleitfähigkeit von 237 W/(m·K) · 0,18 mm · 0,615 ≈ 26,2·10⁻³ W/K. Die XPS-Platte mit dieser Folie hat sowohl den Brandtest als auch den Zugversuch bestanden.

Analoge Versuche wurden mit verschiedenen Materialien, wie z.B. verzinktem Stahl, Kupfer und Grafit durchgeführt. Dabei zeigte sich, dass Kupferfolien dünner sein können als Aluminiumfolien, und zwar im Verhältnis der Wärmeleitfähigkeiten, dass also die flächenspezifische Wärmeleitfähigkeit tatsächlich der für das Brandverhalten maßgebende Parameter ist.

Mit einer vollflächigen verpressten Naturgrafitfolie (ohne Löcher) wird der Brandtest mit einer Foliendicke von 0,2 mm reproduzierbar bestanden. Naturgraphitfolien mit einem Lochanteil von 22,6% und einer Foliendicke von 0,2 mm bestehen die Brandprüfung nicht, wohl aber mit einer Foliendicke von 0,4 mm. Naturgrafit hat eine spezifische Wärmeleitfähigkeit von ca. 150 W/(m·K).

## Patentansprüche

1. XPS-Platte, die aus mindestens zwei dünneren XPS-Platten durch Verschweißen oder Verkleben derselben hergestellt ist, wobei zwischen den dünneren XPS-Platten eine Schicht aus wärmeleitendem Material vorgesehen ist, **dadurch gekennzeichnet, dass** die Schicht eine flächenbezogene Wärmeleitfähigkeit von zumindest 25·10⁻³ W/K bei 20°C hat.

2. XPS-Platte nach Anspruch 1, **dadurch gekennzeichnet, dass** die Schicht eine gelochte Metallfolie ist.

3. XPS-Platte nach Anspruch 2, **dadurch gekennzeichnet, dass** der Flächenanteil der Löcher 20% bis 50% beträgt.

4. XPS-Platte nach Anspruch 1, **dadurch gekennzeichnet, dass** die Schicht ein Geflecht aus Metallfäden ist.

5. XPS-Platte nach einem der Ansprüche 2 bis 4, **dadurch gekennzeichnet, dass** das Metall ausgewählt ist aus Aluminium, Kupfer und Eisen.

6. XPS-Platte nach Anspruch 1, **dadurch gekennzeichnet, dass** die Schicht aus Grafit besteht.
